# FASCICULE DE BREVET EUROPEEN

(11) **EP 3 412 541 B1**
(45) Date de publication et mention de la délivrance du brevet: **08.04.2020**
(21) Numéro de dépôt: 18173813.9
(22) Date de dépôt: 23.05.2018
(51) Int. Cl.: B62D 65/02, B62D 65/00, G01B 3/30, G01B 3/32, G01B 3/38

(54) **PROCEDE D''ASSEMBLAGE D'UNE CHARNIERE DE PORTE DE VEHICULE AUTOMOBILE AVEC CONTROLE DE POSITION**
MONTAGEVERFAHREN EINES TÜRSCHARNIERS EINES KRAFTFAHRZEUGS MIT POSITIONSKONTROLLE
METHOD FOR ASSEMBLING A MOTOR VEHICLE DOOR HINGE WITH POSITION CONTROL

(30) Priorité: 06.06.2017 FR 1755001
(43) Date de publication de la demande: 12.12.2018
(73) Titulaire: PSA Automobiles SA, 78300 Poissy (FR)
(72) Inventeur: JANNUTSCH, Felix, 91400 SACLAY (FR)
(74) Mandataire: Fernandez, Francis Lionel

(56) Documents cités:
- FR-A1- 2 966 583

## Description

La présente invention concerne un procédé d'assemblage d'une charnière de porte de véhicule automobile avec contrôle de position de la charnière par rapport à la caisse du véhicule automobile en direction transversale du véhicule, ceci avant que la porte ne soit montée sur la charnière. Cette charnière est avantageusement une charnière supérieure de deux charnières pour chacune des portes du véhicule.

Une charnière est le lien qui tient la porte au véhicule et qui permet l'articulation pour ouvrir la porte. Une charnière comporte un charnon fixe assemblé sur un élément de structure d'une caisse de véhicule automobile par un dispositif d'assemblage et un charnon pivotant autour d'un axe porté par le charnon fixe, le charnon pivotant étant solidarisé à une porte du véhicule lors du montage de la porte.

Les charnières supérieures de porte de véhicule automobile sont mises en géométrie dans un atelier ferrage. Ces charnières sont mises en place suivant un axe transversal au véhicule automobile, dénommé axe Y, à l'aide d'un dispositif d'assemblage, fréquemment un gabarit d'assemblage. Les mises en géométrie des charnières sont réalisées par rapport aux doublures de porte et d'éléments de structure de la caisse recouverts par une doublure de porte respective. L'outil permet de prendre en compte les variations géométriques de la caisse et des ouvrants afin de garantir les fonctions d'affleurement et d'étanchéité finales à l'atelier montage.

Le document FR 2 966 583 A1 divulgue un procédé d'assemblage d'au moins une charnière de porte de véhicule avec un charnon fixe assemblé sur un élément de structure d'une caisse de véhicule automobile par un dispositif d'assemblage et un charnon pivotant autour d'un axe porté par le charnon fixe, avec, préalablement à un montage de la porte sur la caisse de véhicule, il est effectué un contrôle de positionnement en direction transversale par rapport au véhicule du charnon fixe par un gabarit de contrôle comportant un corps dont une extrémité pénètre autour de l'axe.

Le document FR-A-2 934 190 décrit un dispositif d'assemblage des charnières supérieure et inférieure sur une porte de véhicule automobile, qui se présente sous la forme d'un gabarit comportant les moyens suivants, pris en combinaison. Tout d'abord, il est utilisé des moyens d'appui et de serrage pour positionner le gabarit sur la porte de véhicule, ensuite des moyens de maintien du gabarit en forme de crochet pour garantir le placage du gabarit selon la direction en X, c'est-à-dire dans la direction longitudinale du véhicule automobile.

Le dispositif comprend des moyens de mise en référence géométrique en X, Y, Z, c'est-à-dire en directions respectivement longitudinale, transversale et verticale et de bridage de la charnière supérieure sur le gabarit. Enfin, le dispositif comprend des moyens de mise en référence géométrique en X, Y, Z et de bridage de la charnière inférieure sur le gabarit.

Selon cet état de la technique, il est procédé sans contrôle du positionnement des charnières avant le poste de montage. Ceci induit donc des retouches, c'est à dire des repositionnements des portes, en cas de mauvaise géométrie, ce qui est coûteux en temps de montage.

Par conséquent, le problème à la base de l'invention est de garantir la conformité et la surveillance de la position géométrique d'au moins une charnière pour porte, la charnière étant assemblée à un élément de structure d'un véhicule automobile, le contrôle se faisant avant que la porte ne soit montée sur ses charnières.

Pour atteindre cet objectif, il est prévu selon l'invention un procédé d'assemblage d'au moins une charnière de porte de véhicule avec un charnon fixe assemblé sur un élément de structure d'une caisse de véhicule automobile par un dispositif d'assemblage et un charnon pivotant autour d'un axe porté par le charnon fixe, caractérisé en ce que, préalablement à un montage de la porte sur la caisse de véhicule, il est effectué un contrôle de positionnement en direction transversale par rapport au véhicule du charnon fixe par un gabarit de contrôle comportant un corps dont une extrémité pénètre autour de l'axe et solidarisé de manière réglable en direction transversale avec une portion de contrôle faisant saillie de la caisse de véhicule automobile en s'étendant en direction longitudinale du véhicule afin que la portion de contrôle soit à une distance prédéterminée par rapport à une face extérieure de la caisse adjacente à l'élément de structure, ce contrôle de positionnement se faisant par une mesure de la distance réelle entre la portion de contrôle et la face extérieure et, quand la distance réelle mesurée n'est pas égale à la distance prédéterminée, il est détecté un défaut dans le procédé d'assemblage.

L'effet technique est d'obtenir un contrôle de positionnement efficace et simple de mise en œuvre au poste de ferrage, c'est-à-dire juste après l'assemblage des charnières d'une porte de véhicule automobile sur un élément de structure du châssis du véhicule sans que la porte ne soit montée. Ceci permet de prendre connaissance et, le cas échant, de corriger un défaut d'assemblage juste après sa venue et de ne pas attendre l'atelier de montage pour le constater.

Le gabarit de contrôle est réglable afin de pouvoir servir pour différents modèles de véhicules automobiles différant notamment par leurs éléments de structure sur lesquels sont assemblées les charnières. Le réglage sert à avoir une distance prédéterminée entre la zone du gabarit de contrôle en vis-à-vis de la face extérieure de la caisse du véhicule adjacent à l'élément de structure portant la charnière. La distance réelle est alors mesurée et si cette distance réelle ne correspond pas à la distance prédéterminée, il est diagnostiqué qu'un décalage transversal existera entre la porte et la portion de caisse qui lui est adjacente.

L'invention consiste à garantir les affleurements et étanchéité de portes à l'atelier ferrage en amont de l'atelier montage, sans montage de la porte. L'invention permet de garantir le positionnement des charnières sur la caisse, avantageusement des charnières supérieures de porte, dès l'atelier de ferrage et non plus à la fermeture de la porte à l'atelier de montage.

Avantageusement, quand un défaut est détecté, il est recherché la cause du défaut due soit au dispositif d'assemblage, soit à un réglage entre corps et portion de contrôle du gabarit de contrôle ne correspondant pas ou plus au dispositif d'assemblage ou à l'élément de structure ou soit à un élément de structure portant ladite au moins une charnière présentant au moins un de ses paramètres constitutifs ayant varié par rapport à un paramètre standard défini pour l'élément de structure.

Les causes de défaut peuvent être multiples. Par exemple, sans que cela soit limitatif, le défaut peut être causé par le dispositif d'assemblage qui a été déréglé en utilisation ou par un changement d'un paramètre de l'élément de structure, par exemple un paramètre d'emboutissage. Quand le dispositif d'assemblage a été déréglé, il peut être à nouveau réglé ou quand son réglage est constant dans le temps, c'est le réglage du gabarit de contrôle qui peut être réactualisé avec les nouveaux paramètres du dispositif d'assemblage, par exemple en changeant l'épaisseur d'une cale introduite entre un corps du gabarit de contrôle et une portion de contrôle de ce gabarit.

Avantageusement, il est effectué une mesure de contrôle par le gabarit de contrôle pour un élément de structure portant ladite au moins une charnière pris dans un groupe d'un premier nombre prédéterminé d'éléments de structure portant ladite au moins une charnière et quand, pour un deuxième nombre d'éléments de structure portant ladite au moins une charnière contrôlés, un défaut est détecté, il est effectué une correction du défaut soit par repositionnement du dispositif d'assemblage en fonction au non d'un ou de paramètres de l'élément de structure ou soit par modification du réglage entre corps et portion de contrôle du gabarit de contrôle.

Ceci équivaut à une mesure statistique. Si par exemple pour un élément de structure sur lequel est assemblée une charnière, il peut être contrôlé un élément de structure sur cinquante éléments de structure similaires sur des caisses de véhicule automobile, cinquante étant le premier nombre selon la présente invention. Si le défaut se reproduit pour un deuxième nombre d'éléments contrôlés, par exemple égal à 5, il en est déduit que le défaut se reproduit fréquemment et il est diagnostiqué en tant que tel. Les nombres donnés ne sont pas limitatifs.

Avantageusement, la distance réelle est mesurée par interposition d'un jeu de cales entre la portion de contrôle et la face extérieure, chaque cale du jeu ayant une épaisseur prédéterminée, la distance étant égale à la somme des épaisseurs des cales interposées entre la portion de contrôle et la face extérieure de la caisse.

Ceci est une disposition commune pour la mesure de distance entre deux pièces. La valeur de cette distance peut être relativement basse, le gabarit de contrôle étant en affleurement avec la face externe de la caisse du véhicule ou plus importante. Ceci peut être obtenu par réglage entre corps et portion de contrôle du gabarit de contrôle, ce réglage se faisant par ajout d'au moins une cale de séparation d'une épaisseur prédéterminée dans le gabarit de contrôle.

Avantageusement, ladite au moins une charnière est une charnière supérieure de porte de véhicule automobile. C'est le positionnement de la charnière supérieure qui pose le plus de problème comparé à une charnière inférieure.

L'invention concerne aussi un gabarit de contrôle de la position d'au moins une charnière montée sur un élément de structure d'une caisse de véhicule automobile pour la mise en œuvre d'un tel procédé, caractérisé en ce qu'il comprend, d'une part, un corps présentant une lumière débouchante sur une extrémité du corps adjacente au charnon fixe de ladite au moins une charnière pour une introduction de l'axe du charnon fixe en son intérieur et, d'autre part, une portion de contrôle solidarisée de manière amovible par des moyens de solidarisation avec le corps, au moins une cale de séparation amovible étant insérée entre le corps et la portion de contrôle, une épaisseur prédéterminée de ladite au moins une cale de séparation réglant un espacement entre le corps et la portion de contrôle.

L'invention consiste à contrôler et à surveiller la position en décalage transversal d'une charnière, avantageusement une charnière supérieure, à l'atelier ferrage à l'aide d'un gabarit réglable par insertion d'une ou de cales de séparation entre corps et portion de contrôle du gabarit de contrôle. La zone réglable permet de prendre en compte les variations de positions de la charnière et de réaliser une surveillance par attribut d'une cote de décalage transversal par rapport à la face externe du châssis adjacent à l'élément de structure portant la charnière, cette face externe étant fréquemment dénommée peau de porte.

Avantageusement, le corps et la portion de contrôle s'étendent dans un même plan, la portion de contrôle présentant un pied s'étendant perpendiculairement à une partie de mesure sensiblement rectangulaire portée par la portion de contrôle, une extrémité du pied étant raccordée au corps avec interposition de ladite au moins une cale de séparation entre pied et corps, la partie de mesure de la portion de contrôle étant de forme rectangulaire et s'étendant parallèlement au corps, le corps et la partie de mesure étant séparés par un intervalle correspondant à une longueur du pied et à une épaisseur de ladite au moins une cale de séparation.

Avantageusement, la portion de contrôle comprend une forme concave arrondi formant organe de préhension du gabarit de contrôle, la forme concave étant disposée entre une jonction du pied et de la partie de mesure en étant en vis-à-vis du corps. La préhension du gabarit de contrôle vers sa partie médiane entre corps et partie de mesure en est améliorée.

Avantageusement, la lumière débouchante s'étend longitudinalement dans le corps, la lumière comportant un sillon par enlèvement de matière tout le long de son contour sur au moins une face plane du corps. Un avantage de la lumière débouchante est que cette lumière peut être introduite autour de l'axe de la charnière sans démontage de cet axe du charnon fixe.

Le ou les sillons permettent de dégager de la place pour une introduction de la lumière autour de l'axe. Un élément déjà présent dans l'environnement de l'axe tel qu'une goupille peut pénétrer dans un sillon et éviter que le gabarit de contrôle ne tourne autour de l'axe, la portion de mesure ne pouvant plus être parallèle à la face extérieure du châssis ou peau de porte dans ce cas.

Avantageusement, la face plane du corps, au voisinage de la lumière débouchante, comporte un logement contenant un aimant. Cet aimant est destiné à se coller contre une partie métallique de la charnière, par exemple le charnon mobile alors bloqué en rotation autour de l'axe de charnière et évite au gabarit de contrôle de tourner autour de l'axe de la charnière.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une vue en perspective de dessous d'un gabarit de contrôle selon la présente invention, avec une portion de mesure à l'extérieur de la caisse de véhicule et à distance d'une face extérieure de la caisse pour prendre une mesure de décalage transversal d'une charnière, la cale de séparation formant des crans sur toute la largeur du gabarit de contrôle,
- la figure 2 est une représentation schématique d'une vue en perspective de dessus d'un gabarit de contrôle selon une forme de réalisation conforme à la présente invention, la cale de séparation étant continue sur toute la largeur du gabarit de contrôle,
- la figure 3 est une représentation schématique d'une vue de dessus d'un gabarit de contrôle selon une forme de réalisation conforme à la présente invention et montré à la figure 2.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

Dans ce qui va suivre, on comprend les termes « supérieur », « inférieur », et autres références à des positionnements spatiaux en référence aux composants positionnés dans leur position de fonctionnement et d'usage normal, notamment dans le véhicule automobile reposant sur un sol horizontal.

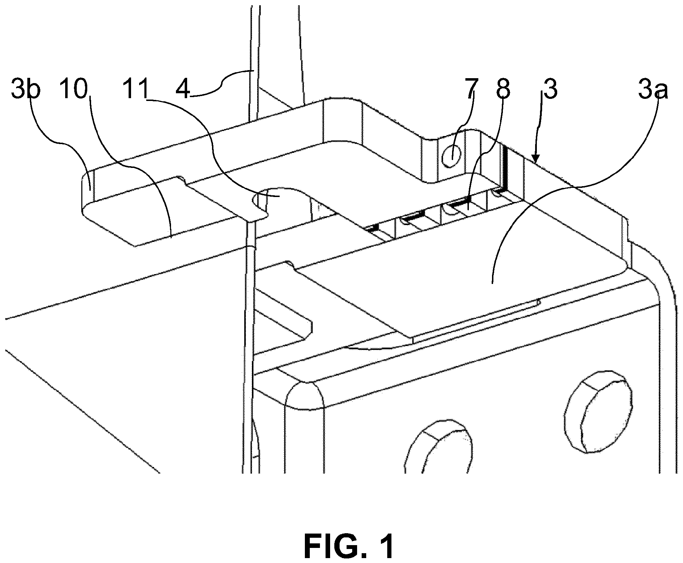

En se référant aux figures 1 à 3, l'invention concerne un procédé d'assemblage d'au moins une charnière 1 de porte de véhicule avec un charnon fixe 1a assemblé sur un élément de structure 2 d'une caisse de véhicule automobile par un dispositif d'assemblage et un charnon pivotant 1b autour d'un axe 1c porté par le charnon fixe 1a. Le dispositif d'assemblage peut être un gabarit de positionnement comme décrit dans le document de l'état de la technique FR-A-2 934 190. L'axe 1c de la charnière 1 s'étend en position sensiblement verticale une fois la charnière 1 assemblée sur l'élément de structure 2.

Il peut y avoir deux charnières par élément de structure 2 disposées verticalement l'une après l'autre avec une charnière supérieure et une charnière inférieure. Le contrôle selon la présente invention peut porter préférentiellement sur la charnière 1 supérieure.

Préalablement à un montage de la porte sur la caisse de véhicule donc sans montage de la porte, le charnon pivotant 1b de la charnière 1 étant libre à part sa solidarisation à l'axe 1c de la charnière 1, il est effectué un contrôle de positionnement en direction transversale par rapport au véhicule du charnon fixe 1a par un gabarit de contrôle 3.

Le gabarit de contrôle 3 comporte un corps 3a dont une extrémité pénètre autour de l'axe 1c, avantageusement introduit autour de l'axe 1c sans démontage de l'axe 1c du charnon fixe 1a. Le gabarit de contrôle 3 est solidarisé de manière réglable en direction transversale avec une portion de contrôle 3b faisant saillie de la caisse de véhicule automobile en s'étendant en direction longitudinale du véhicule afin que la portion de contrôle 3b soit à une distance prédéterminée par rapport à une face extérieure 4 de la caisse adjacente à l'élément de structure 2.

Cette distance peut être choisie arbitrairement. Le contrôle de positionnement se fait par une mesure de la distance réelle entre la portion de contrôle 3b et la face extérieure 4. Quand la distance réelle mesurée n'est pas égale à la distance prédéterminée, il y a eu un décalage transversal de la charnière 1 et il est détecté un défaut dans le procédé d'assemblage, ce défaut pouvant avoir diverses origines.

Quand un défaut est détecté, il est recherché la cause du défaut due soit au dispositif d'assemblage, soit à un réglage entre corps 3a et portion de contrôle 3b du gabarit de contrôle 3 ne correspondant pas ou plus au dispositif d'assemblage ou à l'élément de structure 2 ou soit à un élément de structure 2 portant ladite au moins une charnière 1 présentant au moins un de ses paramètres constitutifs ayant varié par rapport à un paramètre standard défini pour l'élément de structure 2.

Un défaut du dispositif d'assemblage peut être un défaut de montage du dispositif par rapport à l'élément de structure 2 de la caisse ou une variation d'un ou de paramètres du dispositif d'assemblage due à son vieillissement. Le défaut peut être un réglage déficient entre corps 3a et portion de mesure du gabarit de contrôle 3 ne correspondant pas au positionnement réel de la charnière 1 assemblée sur l'élément de structure 2. Enfin, le défaut peut être un ou des paramètres de l'élément de structure 2 ayant changé, par exemple du fait d'une variation de l'emboutissage de l'élément de structure 2. Tous ces défauts peuvent être corrigés avant le montage de la porte sur la charnière 1.

Les contrôles de positionnement des charnières 1 peuvent être statistiques. Il peut être effectué une mesure de contrôle par le gabarit de contrôle 3 pour un élément de structure 2 portant ladite au moins une charnière 1 pris dans un groupe d'un premier nombre prédéterminé d'éléments de structure portant ladite au moins une charnière 1, par exemple un élément de structure 2 pour cinquante éléments de structures.

Quand, pour un deuxième nombre d'éléments de structure portant ladite au moins une charnière 1 contrôlés, un défaut est détecté, ce deuxième nombre étant suffisant pour que le défaut soit considéré comme reproductive étant au moins supérieur à deux et de préférence égal à 5, il peut être effectué une correction du défaut soit par repositionnement du dispositif d'assemblage en fonction ou non d'un ou de paramètres de l'élément de structure 2 ou soit par modification du réglage entre corps 3a et portion de contrôle 3b du gabarit de contrôle 3. La prise en compte du deuxième nombre minimal permet de ne pas entreprendre une correction pour un défaut non reproductible.

La distance réelle peut être mesurée par interposition d'une ou de plusieurs cales d'un jeu de cales entre la portion de contrôle et la face extérieure 4. Comme chaque cale utilisée du jeu a une épaisseur prédéterminée, la distance entre portion de contrôle 3b et face extérieure 4 est égale à la somme des épaisseurs des cales interposées entre la portion de contrôle 3b et la face extérieure 4 de la caisse. Ces cales, non représentées aux figures, sont bien sûr différentes de la ou des cales de séparation 8 intégrées dans le gabarit de contrôle.

L'invention concerne aussi un gabarit de contrôle 3 de la position d'au moins une charnière 1 montée sur un élément de structure 2 d'une caisse de véhicule automobile pour la mise en œuvre d'un tel procédé précédemment décrit.

Le gabarit de contrôle 3 comprend tout d'abord un corps 3a présentant une lumière 5 débouchante sur une extrémité du corps 3a adjacente au charnon fixe 1a de ladite au moins une charnière 1 pour une introduction de l'axe 1c du charnon fixe 1a en son intérieur par poussée du corps 3a à l'intérieur de la charnière 1 et autour de l'axe 1c. Le gabarit de contrôle 3 comprend aussi une portion de contrôle 3b solidarisée de manière amovible par des moyens de solidarisation 6, 7 avec le corps 3a. Ces moyens de solidarisation 6, 7 peuvent être sous la forme de vis ou de boulons.

Au moins une cale de séparation 8 amovible est insérée entre le corps 3a et la portion de contrôle 3b, une épaisseur prédéterminée de ladite au moins une cale de séparation 8 réglant un espacement entre le corps 3a et la portion de contrôle 3b.

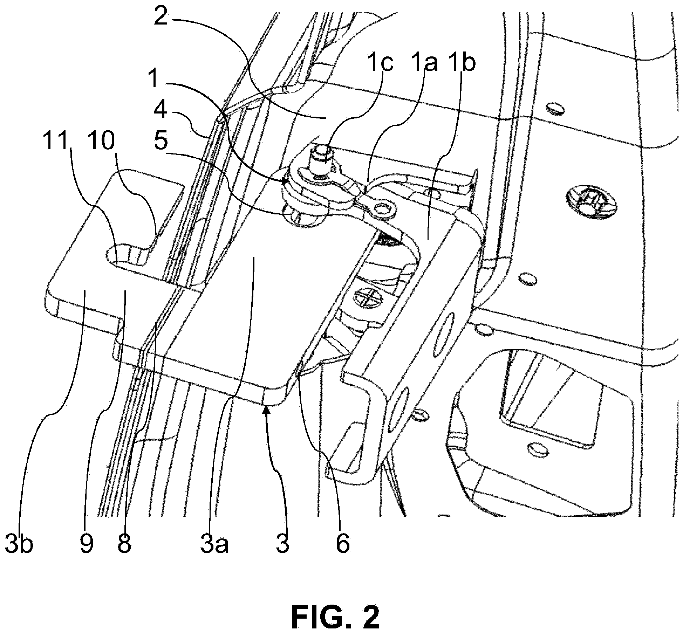

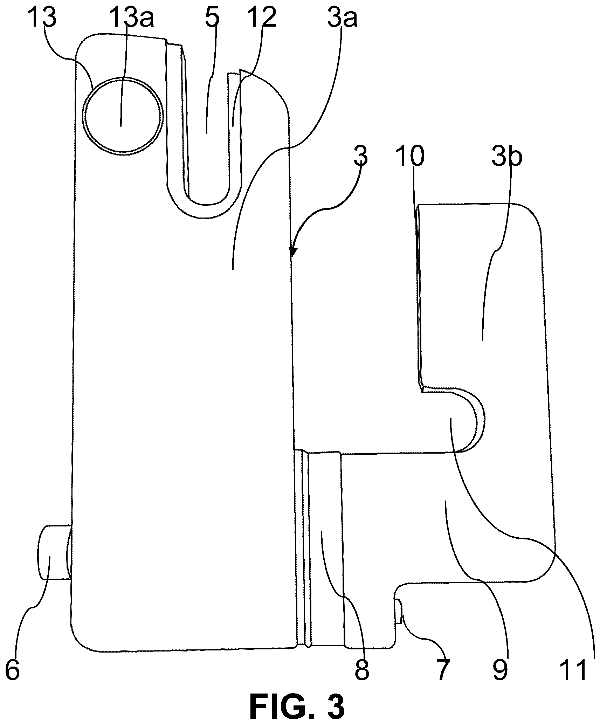

La ou les cales de séparation 8 peuvent présenter diverses configurations. A la figure 1, la cale est sous forme discontinue de crans, tandis qu'aux figures 2 et 3, la cale est continue et s'étend sur toute la jonction entre le corps 3a et la portion de contrôle 3b. Cette dernière forme de réalisation est préférée.

Le gabarit de contrôle 3 peut être métallique ou en matière plastique rigide. Le corps 3a et la portion de contrôle 3b peuvent s'étendre dans un même plan. La portion de contrôle 3b peut présenter un pied 9 s'étendant perpendiculairement à une partie de mesure 10 sensiblement rectangulaire portée par la portion de contrôle 3b et complémentaire au pied 9 pour former cette portion de contrôle 3b.

Une extrémité du pied 9 peut être raccordée au corps 3a avec interposition de la ou des cales de séparation entre pied 9 et corps 3a. La partie de mesure 10 s'étend en vis-à-vis du corps 3a du gabarit de contrôle. En opération, une face extérieure 4 formant peau de porte de la caisse est incorporée entre la partie de mesure 10 à l'extérieur du véhicule automobile et le corps à l'intérieur d'un habitacle du véhicule automobile.

La partie de mesure 10 de la portion de contrôle 3b peut être de forme rectangulaire et s'étendre parallèlement au corps 3a. Le corps 3a et la partie de mesure 10 peuvent donc être séparés par un intervalle correspondant à une longueur du pied 9 et à une épaisseur de ladite au moins une cale de séparation 8, le pied 9 s'arrêtant dans le prolongement de la partie de mesure 10 dans le reste de la portion de contrôle 3b.

La portion de contrôle 3b peut comprendre une forme concave 11 arrondi formant organe de préhension du gabarit de contrôle 3, la forme concave 11 étant disposée entre une jonction du pied 9 et de la partie de mesure 10 en étant en vis-à-vis du corps 3a.

La lumière 5 débouchante peut s'étendre longitudinalement sur une partie de la longueur du corps 3a. La lumière 5 peut comporter un sillon 12 formé par enlèvement de matière tout le long de son contour sur au moins une face plane du corps 3a. Ce sillon 12 peut servir à bloquer un pivotement du corps 3a par rapport à l'axe 1c de la charnière 1. Alternativement ou en complément à cette mesure, le blocage en pivotement du corps 3a par rapport à l'axe 1c de la charnière 1 peut être obtenu ou renforcé par la présence d'un logement 13 contenant un aimant 13a sur la face plane du corps 3a, au voisinage de la lumière 5 débouchante, l'aimant 13a étant en contact magnétique avec par exemple un élément de la charnière.

L'invention n'est nullement limitée aux modes de réalisation décrits et illustrés qui n'ont été donnés qu'à titre d'exemples.

## Revendications

1. Procédé d'assemblage d'au moins une charnière (1) de porte de véhicule avec un charnon fixe (1a) assemblé sur un élément de structure (2) d'une caisse de véhicule automobile par un dispositif d'assemblage et un charnon pivotant (1b) autour d'un axe (1c) porté par le charnon fixe (1a), avec, préalablement à un montage de la porte sur la caisse de véhicule, un contrôle de positionnement en direction transversale par rapport au véhicule du charnon fixe (1a) par un gabarit de contrôle (3) comportant un corps (3a) dont une extrémité pénètre autour de l'axe (1c), **caractérisé en ce que** le gabarit de contrôle est solidarisé de manière réglable en direction transversale avec une portion de contrôle (3b) faisant saillie de la caisse de véhicule automobile en s'étendant en direction longitudinale du véhicule afin que la portion de contrôle (3b) soit à une distance prédéterminée par rapport à une face extérieure (4) de la caisse adjacente à l'élément de structure (2), ce contrôle de positionnement se faisant par une mesure de la distance réelle entre la portion de contrôle (3b) et la face extérieure (4) et, quand la distance réelle mesurée n'est pas égale à la distance prédéterminée, il est détecté un défaut dans le procédé d'assemblage.

2. Procédé selon la revendication précédente, dans lequel, quand un défaut est détecté, il est recherché la cause du défaut due soit au dispositif d'assemblage, soit à un réglage entre corps (3a) et portion de contrôle (3b) du gabarit de contrôle (3) ne correspondant pas ou plus au dispositif d'assemblage ou à l'élément de structure (2) ou soit à un élément de structure (2) portant ladite au moins une charnière (1) présentant au moins un de ses paramètres constitutifs ayant varié par rapport à un paramètre standard défini pour l'élément de structure (2).

3. Procédé selon la revendication précédente, dans lequel il est effectué une mesure de contrôle par le gabarit de contrôle (3) pour un élément de structure (2) portant ladite au moins une charnière (1) pris dans un groupe d'un premier nombre prédéterminé d'éléments de structure portant ladite au moins une charnière (1) et quand, pour un deuxième nombre d'éléments de structure portant ladite au moins une charnière (1) contrôlés, un défaut est détecté, il est effectué une correction du défaut soit par repositionnement du dispositif d'assemblage en fonction au non d'un ou de paramètres de l'élément de structure (2) ou soit par modification du réglage entre corps (3a) et portion de contrôle (3b) du gabarit de contrôle (3).

4. Procédé selon l'une quelconque des revendications précédentes, dans lequel la distance réelle est mesurée par interposition d'un jeu de cales entre la portion de contrôle (3b) et la face extérieure (4), chaque cale du jeu ayant une épaisseur prédéterminée, la distance étant égale à la somme des épaisseurs des cales interposées entre la portion de contrôle (3b) et la face extérieure (4) de la caisse.

5. Procédé selon l'une quelconque des revendications précédentes, dans lequel ladite au moins une charnière (1) est une charnière (1) supérieure de porte de véhicule automobile.

6. Gabarit de contrôle (3) de la position d'au moins une charnière (1) montée sur un élément de structure (2) d'une caisse de véhicule automobile pour la mise en oeuvre du procédé selon l'une quelconque des revendications précédentes, **caractérisé en ce qu'**il comprend, d'une part, un corps (3a) présentant une lumière (5) débouchante sur une extrémité du corps (3a) adjacente au charnon fixe (1a) de ladite au moins une charnière (1) pour une introduction de l'axe (1c) du charnon fixe (1a) en son intérieur et, d'autre part, une portion de contrôle (3b) solidarisée de manière amovible par des moyens de solidarisation (6, 7) avec le corps (3a), ladite au moins une cale de séparation (8) amovible étant insérée entre le corps (3a) et la portion de contrôle (3b), une épaisseur prédéterminée de ladite au moins une cale de séparation (8) réglant un espacement entre le corps (3a) et la portion de contrôle (3b).

7. Gabarit de contrôle (3) selon la revendication précédente, dans lequel le corps (3a) et la portion de contrôle (3b) s'étendent dans un même plan, la portion de contrôle (3b) présentant un pied (9) s'étendant perpendiculairement à une partie de mesure (10) sensiblement rectangulaire portée par la portion de contrôle (3b), une extrémité du pied (9) étant raccordée au corps (3a) avec interposition de ladite au moins une cale de séparation (8) entre pied (9) et corps (3a), la partie de mesure (10) de la portion de contrôle (3b) étant de forme rectangulaire et s'étendant parallèlement au corps (3a), le corps (3a) et la partie de mesure (10) étant séparés par un intervalle correspondant à une longueur du pied (9) et à une épaisseur de ladite au moins une cale de séparation (8).

8. Gabarit de contrôle (3) selon la revendication précédente, dans lequel la portion de contrôle (3b) comprend une forme concave (11) arrondi formant organe de préhension du gabarit de contrôle (3), la forme concave (11) étant disposée entre une jonction du pied (9) et de la partie de mesure (10) en étant en vis-à-vis du corps (3a).

9. Gabarit de contrôle (3) selon l'une quelconque des revendications 6 à 8, dans lequel la lumière (5) débouchante s'étend longitudinalement dans le corps (3a), la lumière (5) comportant un sillon (12) par enlèvement de matière tout le long de son contour sur au moins une face plane du corps (3a).

10. Gabarit de contrôle (3) selon la revendication précédente, dans lequel, la face plane du corps (3a), au voisinage de la lumière (5) débouchante, comporte un logement (13) contenant un aimant (13a).

## Patentansprüche

1. Montageverfahren mindestens eines Kraftfahrzeugtürscharniers (1) mit einer festen Scharnierhälfte (1a), die auf einem Strukturelement (2) einer Karosserie eines Kraftfahrzeugs durch eine Montagevorrichtung montiert ist, und einer Scharnierhälfte (1b), die um eine von der festen Scharnierhälfte (1a) getragene Achse (1c) schwenkt, wobei, vor der Montage der Tür an der Karosserie eines Kraftfahrzeugs eine Positionskontrolle der festen Scharnierhälfte (1a) in Querrichtung zum Kraftfahrzeug mittels einer Kontrollschablone (3) durchgeführt wird, die einen Körper (3a) aufweist, dessen eines Ende um die Achse (1c) herum eindringt, **dadurch gekennzeichnet, dass** die Kontrollschablone in Querrichtung einstellbar mit einem Kontrollabschnitt (3b) verbunden ist, der von der Karosserie des Kraftfahrzeugs vorsteht und sich in Längsrichtung des Kraftfahrzeugs erstreckt, so dass der Kontrollabschnitt (3b) sich in einem vorbestimmten Abstand von einer Außenfläche (4) der an das Strukturelement (2) angrenzenden Karosserie befindet, wobei diese Positionskontrolle eine Messung des tatsächlichen Abstands zwischen dem Kontrollabschnitt (3b) und der Außenfläche (4) durchgeführt wird und, wenn der gemessene tatsächliche Abstand nicht gleich dem vorbestimmten Abstand ist, ein Fehler im Montageverfahren detektiert wird.

2. Verfahren nach dem vorstehenden Anspruch, wobei bei der Detektion eines Fehlers die Ursache des Fehlers gesucht wird, die entweder auf die Montagevorrichtung oder auf eine Verstellung zwischen einem Körper (3a) und einem Kontrollabschnitt (3b) der Kontrollschablone (3) zurückzuführen ist, die nicht oder nicht mehr der Montagevorrichtung oder dem Strukturelement (2) oder einem Strukturelement (2) entspricht, welches das mindestens eine Scharnier (1) trägt, das mindestens einen seiner konstituierenden Parameter aufweist, der in Bezug auf einen für das Strukturelement (2) definierten Standardparameter variiert hat.

3. Verfahren nach dem vorstehenden Anspruch, wobei eine Kontrollmessung mittels der Kontrollschablone (3) für ein Strukturelement (2), welches das mindestens eine Scharnier (1) trägt, durchgeführt wird, das aus einer Gruppe aus einer ersten vorbestimmten Anzahl von Strukturelementen, die das mindestens eine Scharnier (1) tragen, ausgewählt ist, und wenn, für eine zweite Anzahl von Strukturelementen, die das mindestens eine kontrollierte Scharnier (1) tragen, ein Fehler detektiert wird, eine Korrektur des Fehlers entweder durch eine Neupositionierung der Montagevorrichtung in Abhängigkeit der Negation eines oder mehrerer Parametern des Strukturelements (2) oder durch eine Änderung der Einstellung zwischen Körper (3a) und Kontrollabschnitt (3b) der Kontrollschablone (3) durchgeführt wird.

4. Verfahren nach einem der vorstehenden Ansprüche, wobei der tatsächliche Abstand gemessen wird, indem ein Satz von Keilen zwischen dem Kontrollabschnitt (3b) und der Außenfläche (4) des Gehäuses angeordnet wird, wobei jeder Keil des Satzes eine vorbestimmte Dicke aufweist, wobei der Abstand gleich der Summe der Dicken der zwischen dem Kontrollabschnitt (3b) und der Außenfläche (4) der Karosserie angeordneten Keilen ist.

5. Verfahren nach einem der vorstehenden Ansprüche, wobei das mindestens eine Scharnier (1) ein oberes Scharnier (1) einer Kraftfahrzeugtür ist.

6. Kontrollschablone (3) der Position mindestens eines Scharniers (1), das auf einem Strukturelement (2) einer Karosserie eines Kraftfahrzeugs montiert ist, um das Verfahren nach einem der vorstehenden Ansprüche durchzuführen, **dadurch gekennzeichnet, dass** sie einerseits einen Körper (3a) umfasst, der ein durchgehendes Lumen (5) auf einem Ende des Körpers (3a) angrenzend an die feste Scharnierhälfte (1a) des mindestens einen Scharniers (1) zur Einführung der Achse (1c) der festen Scharnierhälfte (1a) in ihr Inneres aufweist, und andererseits einen Kontrollabschnitt (3b) umfasst, der durch Verbindungsmittel (6, 7) lösbar mit dem Körper (3a) verbunden ist, wobei der mindestens eine lösbare Trennkeil (8) zwischen dem Körper (3a) und dem Kontrollabschnitt (3b) eingesetzt ist, wobei eine vorbestimmte Dicke des mindestens einen Trennkeils (8) einen Abstand zwischen dem Körper (3a) und dem Kontrollabschnitt (3b) reguliert.

7. Kontrollschablone (3) nach dem vorstehenden Anspruch, wobei sich der Körper (3a) und der Kontrollabschnitt (3b) in einer gleichen Ebene erstrecken, wobei der Kontrollabschnitt (3b) einen Fuß (9) aufweist, der sich senkrecht zu einem im Wesentlichen rechteckigen Messbereich (10) erstreckt, der von dem Kontrollabschnitt (3b) getragen wird, wobei ein Fußende (9) mit dem Körper (3a) verbunden ist, wobei der mindestens eine Trennkeil (8) zwischen Fuß (9) und Körper (3a) angeordnet ist, wobei der Messbereich (10) des Kontrollabschnitts (3b) eine rechteckige Form aufweist und sich parallel zum Körper (3a) erstreckt, wobei der Körper (3a) und der Messbereich (10) durch einen Abstand getrennt sind, der einer Länge des Fußes (9) und einer Dicke des mindestens einen Trennkeils (8) entspricht.

8. Kontrollschablone (3) nach dem vorstehenden Anspruch, wobei der Kontrollabschnitt (3b) eine abgerundete konkave Form (11) aufweist, die ein Greifelement der Kontrollschablone (3) bildet, wobei die konkave Form (11) zwischen einer Verbindung des Fußes (9) und dem Messbereich (10), der dem Körper (3a) zugewandt ist, angeordnet ist.

9. Kontrollschablone (3) nach einem der Ansprüche 6 bis 8, wobei sich das durchgehende Lumen (5) in Längsrichtung in dem Körper (3a) erstreckt, wobei das Lumen (5) eine Furche (12) durch Entfernen von Material entlang seiner gesamten Kontur auf mindestens einer flachen Seite des Körpers (3a) aufweist.

10. Kontrollschablone (3) nach dem vorstehenden Anspruch, wobei die flache Seite des Körpers (3a) in der Nähe des durchgehenden Lumens (5) einen Sitz (13) aufweist, der einen Magneten (13a) enthält.

## Claims

1. Method for assembling at least one vehicle door hinge (1) with a fixed hinge knuckle (1a) assembled on a structural element (2) of a motor vehicle body by an assembly device and a hinge knuckle pivoting (1b) about an axis (1c) supported by the fixed hinge knuckle (1a), with, prior to a mounting of the door on the vehicle body, a control for positioning in the transversal direction with respect to the vehicle of the fixed hinge knuckle (1a) by a control template (3) comprising a body (3a) of which an end penetrates about the axis (1c), **characterised in that** the control template is secured adjustably in the transversal direction with a control portion (3b) protruding from the motor vehicle body by extending in the longitudinal direction of the vehicle, such that the control portion (3b) is at a predetermined distance with respect to an outer face (4) of the body adjacent to the structural element (2), this positioning control being done by a measurement of the actual distance between the control portion (3b) and the outer face (4) and, when the actual distance measured in not equal to the predetermined distance, a defect is detected in the assembly method.

2. Method according to the preceding claim, wherein, when a defect is detected, the cause of the defect due to the assembly device it is sought, either at an adjustment between body (3a) and control portion (3b) of the control template (3) not or no longer corresponding to the assembly device or to the structural element (2), or at a structural element (2) supporting said at least one hinge (1) having at least one of the constitutive parameters thereof having varied with respect to a standard diameter defined for the structural element (2).

3. Method according to the preceding claim, wherein a control measurement is taken by the control template (3) for a structural element (2) supporting said at least one hinge (1) taken in a group of a first predetermined number of structural elements supporting said at least one hinge (1) and when, for a second number of controlled structural elements supporting said at least one hinge (1), a defect is detected, a correction of the defect is made, either by repositioning the assembly device according (or not) to one or more parameters of the structural element (2) or by modification of the adjustment between body (3a) and control portion (3b) of the control template (3).

4. Method according to any one of the preceding claims, wherein the actual distance is measured by interposition of a set of wedges between the control portion (3b) and the outer face (4), each wedge of the set having a predetermined thickness, the distance being equal to the sum of the thicknesses of the wedges interposed between the control portion (3b) and the outer face (4) of the body.

5. Method according to any one of the preceding claims, wherein said at least one hinge (1) is a motor vehicle door upper hinge (1).

6. Template for controlling (3) the position of at least one hinge (1) mounted on a structural element (2) of a motor vehicle body for the implementation of the method according to any one of the preceding claims, **characterised in that** it comprises, on the one hand, a body (3a) have a space (5) opening onto an end of the body (3a) adjacent to the fixed hinge (1a) of said at least one hinge (1) for an introduction of the axis (1c) of the fixed hinge knuckle (1a) inside it and, on the other hand, a control portion (3b) removably secured by securing means (6, 7) with the body (3a), said at least one removable separation wedge (8) being inserted between the body (3a) and the control portion (3b), a predetermined thickness of said at least one separation wedge (8) adjusting a space between the body (3a) and the control portion (3b).

7. Control template (3) according to the preceding claim, wherein the body (3a) and the control portion (3b) extending into one same plane, the control portion (3b) having a foot (9) extending perpendicularly to a substantially rectangular measuring portion (10) supported by the control portion (3b), an end of the foot (9) being connected to the body (3a) with interposition of said at least one separation wedge (8) between foot (9) and body (3a), the measuring portion (10) of the control portion (3b) being rectangular-shaped and extending parallel to the body (3a), the body (3a) and the measuring portion (10) being separated by an interval corresponding to a length of the foot (9) and to a thickness of said at least one separation wedge (8).

8. Control template (3) according to the preceding claim, wherein the control portion (3b) comprises a rounded concave shape (11) forming a member for gripping the control template (3), the concave shape (11) being arranged between a junction of the foot (9) and of the measuring portion (10) by being opposite the body (3a).

9. Control template (3) according to any one of claims 6 to 8, wherein the opening space (5) extends longitudinally into the body (3a), the space (5) comprising a groove (12) by removing material all along the edge thereof over at least one flat face of the body (3a).

10. Control template (3) according to the preceding claim, wherein, the flat face of the body (3a), in the vicinity of the opening space (5), comprises a housing (13) containing a magnet (13a).
